# EUROPÄISCHE PATENTANMELDUNG

(11) **EP 0 649 775 A1**
(43) Veröffentlichungstag der Anmeldung: **26.04.1995**
(21) Anmeldenummer: 93116908.0
(22) Anmeldetag: 20.10.1993
(51) Int. Cl.: B60Q 7/00

(54) **Zusammenlegbares Warndreieck**

(71) Anmelder: GEBRA GMBH & CO. GEBR. RADERSCHAD KG, 53773 Hennef (DE)
(72) Erfinder: Fischer, Diethelm, D-53773 Hennef (DE)
(74) Vertreter: Fechner, Joachim, Dr.-Ing.

(57) **Zusammenfassung**

Das zusammenlegbare Warndreieck zur Mitführung in Kraftfahrzeugen mit drei die Dreiecksseiten bildenden Leisten (1,2,3), von denen die Basisleiste (1) mit ausschwenkbaren Standfüßen (11) versehen ist und die beiden anderen Leisten (2,3) an einem Ende an der Basisleiste (1) angelenkt sind und an dem die Dreiecksspitze bildenden freien Ende (2^{a} bzw. 3^{a}) mit Mitteln zur lösbaren Verbindung miteinander versehen sind, ist dadurch gekennzeichnet, daß das freie Ende (2^{a},3^{a}) wenigstens einer der beiden Seiten (2,3) mit einer Durchbrechung (2^{b},3^{f}) versehen ist und ein flexibles Mittel (4), dessen Länge wenigstens gleich der Länge der Leiste (2,3) ist, an dem Ende (3^{a}) der einen Leiste (3) angeordnet ist und durch die in der anderen Leiste (2) ausgebildete Durchbrechung (2^{b}) hindurchgefuhrt ist. Das Warndreieck läßt sich in einfacher Weise aus dem zusammengelegten Zustand aufrichten und schnell aufstellen.

## Beschreibung

Die Erfindung betrifft ein zusammenlegbares Warndreieck zur Mitführung in Kraftfahrzeugen mit drei die Dreiecksseiten bildenden Leisten, von denen die Basisleiste mit ausschwenkbaren Standfüssen versehen ist und die beiden anderen Leisten an einem Ende an der Basisleiste angelenkt sind und an dem die Dreiecksspitze bildenden freien Ende mit Mitteln zur Verbindung miteinander versehen sind.

Die Leisten dieser Warndreiecke haben vorderseitig im allgemeinen eine bei Nacht Licht reflektierende Fläche und eine bei Tag reflektierende Fläche. Das Warndreieck wird im Fahrzeug im zusammengelegten Zustand mitgeführt, in dem die an der Basisleiste angelenkten Leisten vor bzw. hinter die Basisleiste geschwenkt sind und auch die Standfüße an die Basisleiste eingeschwenkt sind. Das zusammengelegte Warndreieck bildet dann ein flaches Paket, das in einem dieser flachen Form angepaßten Behälter mitgeführt wird. In einer Notsituation oder Panne muß das zusammengelegte Warndreieck aus dem Behälter entnommen und aufstellbereit gemacht werden. Dies ist für die in der gegebenen Situation oft nervlich belastete Person mühsam und zeitraubend.

Aus EP-A-89108120.0 ist es bekannt, die ausschwenkbaren Standfüße in ihren Gelenken mit Torsionsfedern zu versehen, so daß die Standfüße nach der Entnahme des zusammengelegten Warndreiecks aus dem Behälter selbsttätig ausschwenken. Die vor bzw. hinter die Basisleiste herabgeschwenkten Leisten des Dreiecks müssen jedoch von Hand aufgerichtet und an ihren freien Enden durch den dafür vorgesehenen Druckknopf oder dergl. unter Bildung eines formstabilen Dreiecks verbunden werden. Zum Zusammenlegen des Warndreiecks müssen der Druckknopf wieder gelöst und die Leisten wieder zur Basisleiste herabgeschwenkt werden.

In der DE-A-42 10 249.9 wurde ein zusammenlegbares Warndreieck vorgeschlagen, bei dem die beiden schwenkbaren Leisten aus je einem ersten und einem zweiten Leistenteil bestehen, die beiden ersten Leistenteile der beiden Leisten durch die Basisgelenke an der Basisleiste angelenkt sind, an einem oder beiden Leistenteilen jeder der beiden Leisten Mittel zur gegenseitigen Verschiebungsführung der beiden Leistenteile in der Leistenlängsrichtung ausgebildet sind und die den Basisgelenken entfernten Enden der zweiten Leistenteile beider Leisten durch ein drittes Gelenk schwenkbar verbunden sind. Dieses Warndreieck richtet sich bei Bestückung mit Gelenkfedern oder dergl. automatisch auf, sobald es seinem Behälter entnommen wird, so daß die Aufstellung des Dreiecks erleichtert wird.

Der Erfindung liegt die Aufgabe zugrunde, ein zusammenlegbares Warndreieck zur Mitführung in Kraftfahrzeugen zu schaffen, das aus dem zusammengelegten Zustand in einfacher Weise aufgerichtet werden kann. Insbesondere soll das Warndreieck in einfacher Weise nach der Entnahme aus dem Behälter im wesentlichen selbsttätig in den aufstellbereiten Zustand übergehen. Dabei sollen die freien Enden der Seitenleisten im Anschluß an die Aufrichtung ohne besondere Maßnahmen verbunden werden, so daß ein stabiles Dreieck entsteht. Insbesondere soll das Warndreieck mit der gleichen Handbewegung, mit der es aus seinem Behälter gezogen wird, anschließend auch aufgerichtet werden. Weitere Vorteile ergeben sich aus der nachfolgenden Beschreibung.

Diese Aufgabe wird bei dem eingangs genannten zusammenlegbaren Warndreieck erfindungsgemäß dadurch gelöst, daß das freie Ende wenigstens einer der beiden Leisten mit einer Durchbrechung versehen ist und ein flexibles Mittel, dessen Länge wenigstens gleich der Länge der Leiste ist, an dem Ende der einen Leiste angeordnet und durch die in der anderen Leiste ausgebildete Durchbrechung hindurchgeführt ist. Das zusammengelegte Warndreieck wird in einem köcherförmigen Behälter untergebracht, der an einem Ende durch einen aufgesetzten Deckel verschlossen werden kann. Nach dem Entfernen des Deckels wird das zusammengelegte Warndreieck an dem dann freiliegenden flexiblen Mittel erfaßt und aus dem Behälter gezogen. Sofort nach dem Verlassen des Behälters wird das an dem flexiblen länglichen Mittel hängende Warndreieck auf Grund der erfindungsgemäßen Anbringung des flexiblen Mittels an den beiden freien Enden der schwenkbaren Leisten zum Dreieck aufgerichtet. Dabei kommen schließlich auf Grund des Gewichtes des Dreiecks die freien Enden der aufgerichteten Leisten zur Anlage aneinander, wobei gleichzeitig die die Dreiecksspitze bildende lösbare Verbindung zwischen ihnen hergestellt wird. Wenn die Standfüße entsprechend EP-A-89108120.0 gleichzeitig automatisch ausschwenken, ist das Warndreieck aufstellbereit.

Nach einer bevorzugten Ausführungsform der Erfindung ist das eine Ende des flexiblen Mittels an dem freien Ende einer Leiste befestigt und das andere, durch die Durchbrechung in der anderen Leiste geführte Ende des flexiblen Mittels mit einer Handhabe versehen. Das flexible Mittel hat dabei im allgemeinen eine etwas größere Länge als eine Seite des Dreiecks. Beim Herausziehen des Dreiecks aus dem Behälter hat die Handhabe nur einen geringen Abstand von der Durchbrechung. Wenn nach der Entnahme aus dem Behälter die Leisten aufgerichtet werden und dabei der Abstand der freien Enden der Seitenleisten auf null verringert wird, läuft das flexible Mittel durch die Durchbrechung, bis die beiden freien Enden der Leisten aneinanderstoßen und die lösbare Verbindung zwischen den beiden Enden hergestellt wird.

Zweckmäßigerweise ist bei dieser Ausführungsform das flexible Mittel an der Rückseite der an der Vorderseite der Basisleiste angelenkten Leiste befestigt und durch die Durchbrechung der an der Rückseite der Basisleiste angelenkten Leiste geführt. Das flexible Mittel ist somit auf der Vorderseite des aufgestellten Warndreiecks nicht sichtbar.

Bei einer anderen Ausführungsform des erfindungsgemäßen Warndreiecks sind die freien Enden beider Leisten mit je einer Durchbrechung versehen, ist das flexible längliche Mittel endlos durch die beiden Durchbrechungen geführt, die Länge des endlosen flexiblen Mittels wenigstens gleich der zweifachen Länge der Leiste und ist ferner das flexible Mittel mit einer Handhabe versehen. Bei dieser Ausführungsform ist das endlose flexible Mittel, das mindestens die doppelte Länge einer Seitenleiste hat, durch beide Durchbrechungen geführt. Die Handhabe ist beim Öffnen des Behälters faßbar und dient dazu, das Warndreieck aus dem köcherförmigen Behälter herauszuziehen. Nach Austritt des zusammengelegten Warndreiecks aus dem Behälter hängt das Dreieck an dem flexiblen länglichen Mittel. Auf Grund des Gewichtes des Dreiecks und der losen Führung des flexiblen Mittels durch die beiden Durchbrechungen an den beiden freien Enden der aufzurichtenden Seitenleisten werden nunmehr die Seitenleisten aufgerichtet, bis ihre Durchbrechungen hintereinander liegen, so daß die gewünschte Dreiecksform hergestellt ist. In dieser Lage werden die freien Enden der Leisten zu einem stabilen Dreieck verbunden.

Nach der bevorzugten Ausführungsform ist das flexible Mittel als textile Schnur ausgebildet. Darüber hinaus kann das flexible Mittel auch z.B. als Kabel, insbesondere gummibeschichtetes Kabel, feingliedrige Kette oder dergl. ausgebildet sein. Wesentlich ist nur, daß das flexible Mittel mit nur minimaler Reibung durch die Durchbrechung(en) gleiten kann. Außerdem muß die Flexibilität des Mittels so groß sein, daß das Mittel unter dem Gewicht des Warndreiecks senkrecht hängt.

Das an den freien Enden der schwenkbaren Leisten angebrachte Mittel zur Verbindung dieser Enden kann jedes Mittel sein, das unter dem durch das Aufrichten entstehenden gegenseitigen Andruck der Leistenenden eine lösbare Verbindung dieser Leistenenden ergibt. Bei einer Ausführungsform ist dieses Mittel ein Druckknopf, der sich unter dem entstehenden Andruck schließt.

Bei einer anderen Ausführungsform des erfindungsgemäßen Warndreiecks ist das Mittel zur Verbindung der freien Enden der Leisten ein auf dem flexiblen Mittel dicht an dessen Befestigungsende oder ein auf der einen Leiste angebrachter, mit der Durchbrechung der anderen Leiste in Klemmeingriff kommender, elastischer Klemmkörper. Wenn die an dem flexiblen, länglichen Mittel hängenden Leisten aufgerichtet sind und zur gegenseitigen Anlage kommen, dringt dieser Klemmkörper in die Durchbrechung ein, wobei die Leistenenden durch den entstehenden Klemmsitz lösbar verbunden werden.

Bei einer weiteren Ausführungsform des erfindungsgemäßen Warndreiecks besteht das Mittel zur Verbindung der freien Enden der Leisten aus an dem flexiblen Mittel oder an der einen Leiste angebrachten Rasten. Diese vorzugsweise aus Kunststoff bestehenden, federnden Rasten dringen in die das flexible Mittel führende Durchbrechung in der anderen Leiste ein und hintergreifen die Leiste auf der Rückseite. Es sind auch andere lösbare Verbindungen der Leistenenden möglich, etwa durch Klettverbindung oder durch Magnete.

Zweckmäßigerweise ist das Warndreieck im zusammengelegten Zustand in einen mit Deckel verschließbaren, köcherförmigen Behälter eingeschoben und ist das flexible längliche Mittel an der Innenseite des Behälterdeckels angebracht. In diesem Falle dient der Behälterdeckel zugleich als Handhabe an dem flexiblen Mittel sowohl zum Herausziehen des zusammengelegten Warndreiecks aus dem Behälter als auch zum Aufrichten des Dreiecks, indem man das Dreieck an dem flexiblen Mittel und Behälterdeckel hängend über den Erdboden hält, so daß sich die Leisten unter dem Gewicht des Dreiecks aufrichten und ggfs. auch die Standfüße automatisch ausschwenken können. Das hängende, aufstellbereite Warndreieck kann so an die Stelle getragen werden, an der es aufgestellt werden soll.

Die Erfindung wird nachfolgend an Hand der Zeichnung näher beschrieben. Es zeigen
Figur 1 einen köcherförmigen Behälter mit dem zusammengelegten Warndreieck bei abgenommenem Deckel;
Figur 2 das aus dem Behälter entnommene Warndreieck in teilweise aufgerichtetem Zustand;
Figur 3 das vollständig aufgerichtete, aufstellbereite Warndreieck;
Figur 4 die freien Enden der aufgerichteten Seitenleisten in vergrößertem Maßstab mit einer Ausführungsform des Mittels zur lösbaren Verbindung der Leistenenden;
Figur 5 eine weitere Ausführungsform des Mittels zur lösbaren Verbindung der Leistenenden; und
Figur 6 eine etwas geänderte Ausführungsform des erfindungsgemäßen Warndreiecks in teilweise aufgerichtetem Zustand.

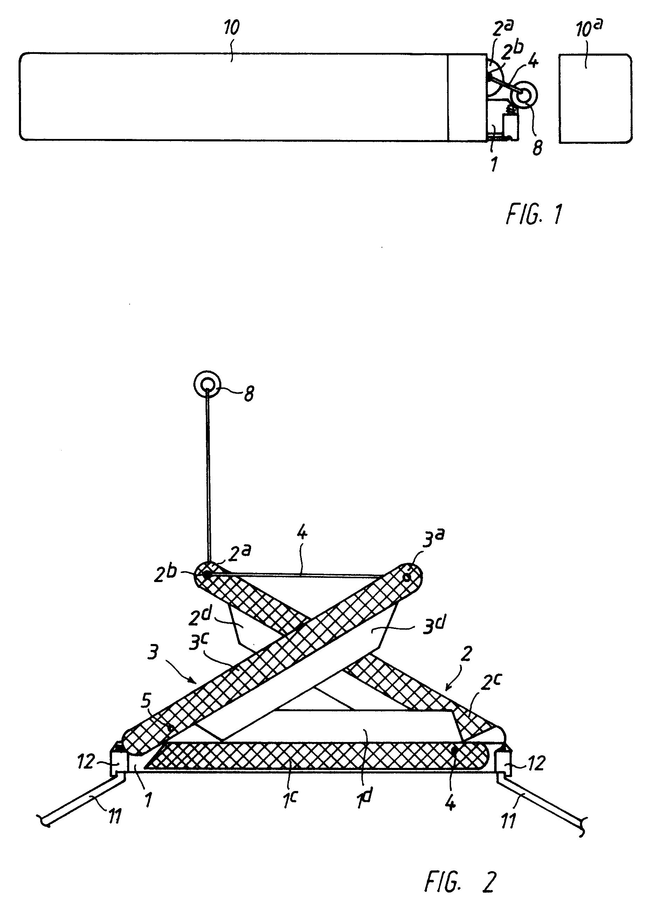

Aus Figur 1 ist ersichtlich, daß nach Abnahme des Deckels 10^{a} von dem köcherförmigen Behälter 10 ein Stück des zusammengelegten Warndreiecks aus dem Behälter herausragt, und zwar im wesentlichen ein Teil der Basisleiste 1 und das freie Ende 2^{a} der Leiste 2 mit der Durchbrechung 2^{b}, durch die eine Schnur 4 geführt ist, an deren Ende eine Handhabe 8 in Form eines Ringes angebracht ist.

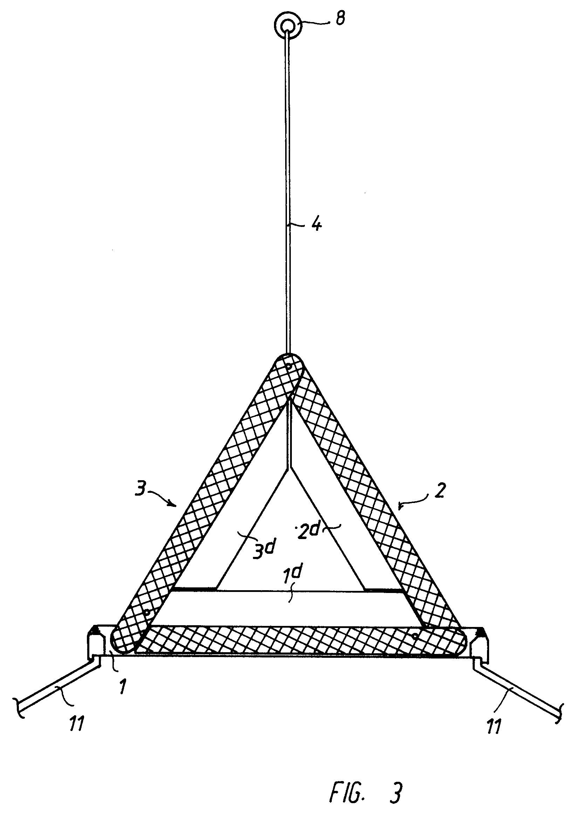

Die in den Figuren 2 und 3 gezeigte Ausführungsform des Warndreiecks umfaßt eine vorzugsweise aus Metall bestehende Basisleiste 1 und zwei an der Basisleiste durch die Basisgelenke 4 und 5 schwenkbar angebrachte Leisten 2 bzw. 3. Die Leisten 1 bis 3 haben vorderseitig in üblicher Weise eine kreuzschraffiert dargestellte Nachtreflektorfläche 1^{c}-3^{c} und eine rote Tagreflektorfläche 1^{d}-3^{d}. Die Schnur 4 ist an dem freien Ende 3^{a} der Leiste 3 rückseitig fest angebracht und durch ein am freien Ende 2^{a} der Leiste 2 ausgebildetes Loch 2^{b} geführt, wie aus Figur 2 ersichtlich ist. Wird das zusammengelegte Warndreieck am Ring 8 aus dem Köcher 10 gezogen und am Ring 8 gehalten, bewirkt die Führung der Schnur 4 und das Gewicht des Dreiecks, daß dieses sich entsprechend Figur 2 aufrichtet, wobei die Winkel zwischen der Basisleiste 1 einerseits und den Leisten 2 und 3 andererseits von null auf 60° zunehmen und die freien Enden 2^{a} und 3^{a} der Leisten hintereinander zu liegen kommen, wie in Figur 3 gezeigt ist. Wenn dieStandfüße 11 des Dreiecks in den Lagerkörpern 12 durch Federn vorgespannt sind, schwenken sie selbsttätig aus, sobald das Dreieck den Köcher 10 verlassen hat.

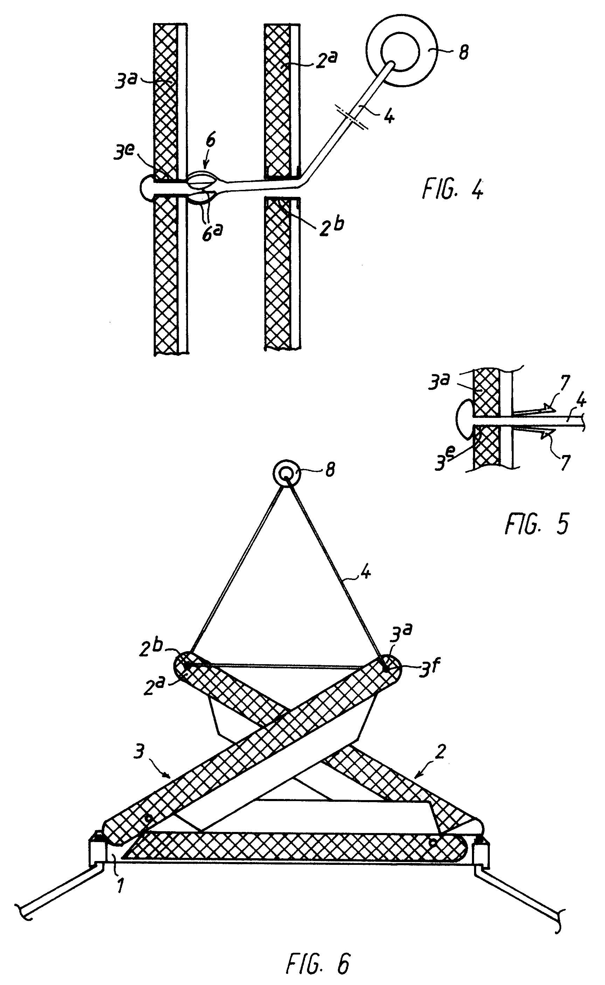

Um das so aufgerichtete Warndreieck mit den hintereinander liegenden freien Enden 2^{a} und 3^{a} der Leisten 2,3 zu stabilisieren, können verschiedene Verbindungsmittel vorgesehen sein. Bei der in Figur 4 gezeigten Ausführungsform dieser Mittel ist die Schnur 4 in einer Bohrung 3^{e} des freien Endes 3^{a} der Leiste 3 befestigt. An der Leiste 3 sitzt rückseitig ein elastischer Klemmkörper 6 auf der Schnur 4, der mehrere nach außen gewölbte, über den Umfang verteilte elastische Stege 6^{a} aufweist. Aus den Figuren 2 bis 4 erkennt der Fachmann, daß das an dem Ring 8 hängende, zunächst zusammengelegte Warndreieck im Sinne der Figuren 2 und 3 unter Bildung eines gleichseitigen Dreiecks aufgerichtet wird. Da die Schnur 4 dabei mit erheblicher Geschwindigkeit durch die Durchbrechung 2^{b} gezogen wird, d.h. die beiden freien Enden 2^{a} und 3^{a} mit einer beachtlichen Geschwindigkeit zusammengeführt werden, dringt der Klemmkörper 6 in die Durchbrechung 2^{b} ein und bewirkt dadurch einen festen, aber lösbaren Klemmsitz in der Bohrung, so daß das Dreieck im aufgerichteten Zustand stabilisiert wird.

Anstelle des Klemmkörpers 6 können auch entsprechend Figur 5 federnde Rasten 7 vorgesehen werden, die bei der Annäherung der freien Enden 2^{a} und 3^{a} durch die Bohrung 2^{b} dringen und dann die Rückseite der Leiste 2 rastend hintergreifen.

Figur 6 zeigt eineDarstellung analog zu Figur 2 bei einer etwas geänderten Ausführungsform. Die Leiste 3 hat hierbei eine Bohrung 3^{f} von etwa gleichem Durchmesser wie die Bohrung 2^{b}. Die mit einem Ring 8 versehene, endlose Schnur 4 ist durch die beiden Bohrungen 2^{b} und 3^{f} geführt, und zwar von der Vorderseite der Leiste 2 zurRückseite der Leiste 3, so daß die Schnur durch beide Bohrungen rutschen kann. Aus der Figur 6 ist ersichtlich, daß das an dem Ring 8 aufgehängte Warndreieck unter seinem Gewicht aufgerichtet wird. Die Verbindung der freien Enden 2^{a} und 3^{a} der Leisten 2 bzw. 3 kann wiederum durch einen Klemmkörper 6, federnde Rastnasen 7 oder auch z.B. durch eine Klettverbindung (nicht dargestellt) erreicht werden.

## Patentansprüche

1. Zusammenlegbares Warndreieck zur Mitführung in Kraftfahrzeugen mit drei die Dreiecksseiten bildenden Leisten (1,2,3), von denen dieBasisleiste (1) mit ausschwenkbaren Standfüßen (11) versehen ist und die beiden anderen Leisten (2,3) an einem Ende an der Basisleiste (1) angelenkt sind und an dem die Dreiecksspitze bildenden freien Ende (2^{a} bzw. 3^{a}) mit Mitteln zur lösbaren Verbindung miteinander versehen sind, dadurch gekennzeichnet, daß das freie Ende (2^{a},3^{a}) wenigstens einer der beiden Seiten (2,3) mit einer Durchbrechung (2^{b},3^{f}) versehen ist und ein flexibles Mittel (4), dessen Länge wenigstens gleich der Länge der Leiste (2,3) ist, an dem Ende (3^{a}) der einen Leiste (3) angeordnet ist und durch die in der anderen Leiste (2) ausgebildete Durchbrechung (2^{b}) hindurchgeführt ist.

2. Warndreieck nach Anspruch 1, dadurch gekennzeichnet, daß das eine Ende des flexiblen Mittels (4) an dem freien Ende (3^{a}) der einen Leiste (3) befestigt ist und das andere, durch die Durchbrechung (2^{b}) in der anderen Leiste (2) geführte Ende des flexiblen Mittels mit einer Handhabe (8) versehen ist.

3. Warndreieck nach Anspruch 2, dadurch gekennzeichnet, daß das flexible Mittel (4) an der Rückseite der an der Vorderseite der Basisleiste (1) angelenkten Leiste (3) befestigt ist und durch die Durchbrechung (2^{b}) der an der Rückseite der Basisleiste (1) angelenkten Leiste (2) geführt ist.

4. Warndreieck nach Anspruch 1, dadurch gekennzeichnet, daß die freien Enden (2^{a},3^{a}) beider Leisten (2,3) mit je einer Durchbrechung (2^{b},3^{f}) versehen sind, das flexible Mittel (4) endlos durch die beiden Durchbrechungen (2^{b},3^{f}) geführt ist, die Länge des endlosen flexiblen Mittels (4) wenigstens gleich der zweifachen Länge der Leiste (2,3) ist und das flexible mittel mit einer Handhabe (8) versehen ist.

5. Warndreieck nach einem der Ansprüche 1 bis 4, dadurch gekennzeichnet, daß das flexible Mittel (4) als Schnur ausgebildet ist.

6. Warndreieck nach einem der Ansprüche 1 bis 5, dadurch gekennzeichnet, daß das Mittel zur Verbindung der freien Enden (2^{a},3^{a}) der Leisten (2,3) ein Druckknopf ist.

7. Warndreieck nach einem der Ansprüche 1 bis 5, dadurch gekennzeichnet, daß das Mittel zur Verbindung der freien Enden (2^{a},3^{a}) derLeisten (2,3) ein auf dem flexiblen Mittel (4) dicht an dessen Befestigungsende oder ein auf der einen Leiste (3) angebrachter, mit der Durchbrechung (2^{b}) in der anderen Leiste (2) in Klemmeingriff kommender, elastischer Klemmkörper (6) ist.

8. Warndreieck nach Anspruch 2 oder 3, dadurch gekennzeichnet, daß das Mittel zur Verbindung der freien Enden (2^{a},3^{a}) der Leisten (2,3) aus Rasten (7) besteht.

9. Warndreieck nach einem der Ansprüche 1 bis 8, dadurch gekennzeichnet, daß es im zusammengelegten Zustand in einen mit Deckel (10^{a}) verschließbarenBehälter (10) einsetzbar ist und das flexible Mittel (4) an der Innenseite des Deckels (10^{a}) angebracht ist.
